(19) Europäisches Patentamt
European Patent Office
Office européen des brevets

(11) EP 3 767 917 B1

(12) **FASCICULE DE BREVET EUROPEEN**

(45) Date de publication et mention
de la délivrance du brevet:
**16.02.2022 Bulletin 2022/07**

(21) Numéro de dépôt: **20184986.6**

(22) Date de dépôt: **09.07.2020**

(51) Classification Internationale des Brevets (IPC):
**H04L 29/06** *(2006.01)* **H04W 12/06** *(2021.01)*

(52) Classification Coopérative des Brevets (CPC):
**H04L 63/0861; H04W 12/06**

(54) **SYSTÈME D'IDENTIFICATION D'UN INDIVIDU**

SYSTEM ZUR IDENTIFIZIERUNG EINER PERSON

SYSTEM FOR IDENTIFYING AN INDIVIDUAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.07.2019 FR 1908153**

(43) Date de publication de la demande:
**20.01.2021 Bulletin 2021/03**

(73) Titulaire: **IN-IDT**
**75016 Paris (FR)**

(72) Inventeurs:
• **MALBOROUGT, Jean-Noël**
**91160 BALLAINVILLIERS (FR)**
• **DIEUPART, Christophe**
**94370 SUCY EN BRIE (FR)**

(74) Mandataire: **Marks & Clerk France**
**Immeuble "Visium"**
**22, avenue Aristide Briand**
**94117 Arcueil Cedex (FR)**

(56) Documents cités:
WO-A1-2019/022658    FR-A1- 2 864 289
GB-A- 2 551 794    US-B1- 7 181 017

**Description**

L'invention se situe dans le domaine de l'identification d'individus tout en respectant la protection des données personnelles.

En France, il existe un organisme, la CNIL, qui est le garant de la protection des données personnelles. Dans ce cadre, cet organisme veille à ce que le stockage des données biométriques et leurs usages soient réalisés dans le respect de la liberté et de la vie privée des individus, notamment avec le nouveau règlement de la protection des données ou RGPD. De ce fait, la mise en oeuvre d'un processus d'identification d'un individu nécessite la mise en place de mécanisme complexe ayant un haut niveau de sécurité garantissant la confidentialité des données et un usage maîtrisé.

L'art antérieur décrit différents mécanismes et systèmes pour identifier une personne.

Un objet de l'invention est de proposer un système et une méthode permettant d'identifier une personne tout en garantissant la confidentialité de ses données personnelles.

Le procédé et le système selon l'invention reposent notamment sur un double chiffrement des données propres à un individu avec :

Dans un premier temps, la signature et le chiffrement asymétrique de la donnée par une autorité certifiée,

Dans un second temps, le chiffrement asymétrique de la donnée par une clé privée détenue par un individu.

Dans la suite de la description on définit sous le mot « donnée », une donnée biométrique / biographique propre à l'identification d'un individu. Une « identité numérique » est définie comme un ensemble de données biographiques et/ou biométriques caractérisant un individu.

L'invention concerne un procédé pour identifier un individu équipé d'un terminal mobile dans un système comportant un ou plusieurs équipements de contrôle EQ caractérisé en ce qu'il comporte au moins les étapes suivantes :

- L'individu donne son consentement à un équipement de contrôle EQ et s'authentifie,
- Une association logique entre l'équipement et le terminal mobile d'un individu est établie lorsque la distance entre l'individu et l'équipement EQ est inférieure à une valeur seuil,
- L'équipement EQ lance une séquence d'acquisition de données biométriques,
- Le terminal mobile transmet un élément caractéristique à un serveur de stockage $S_2$ afin de récupérer des données biométriques/biographiques,
- Le serveur de stockage $S_2$ vérifie l'existence d'un jeton de session auprès d'un serveur $S_4$ d'authentification et consulte une table de correspondance contenant le lien vers des données chiffrées caractéristiques de l'individu,
- Le serveur de stockage transmet des données chiffrées E" au terminal mobile qui utilise une clé privée de l'individu afin de déchiffrer les données E",
- Les données déchiffrées E' sont transmises au serveur d'authentification qui exécute les étapes suivantes :
- Demande à une autorité $S_3$ de déchiffrer les données chiffrées E' avec une clé privée de l'autorité $S_3$, afin d'obtenir les données E propres à l'individu et demande simultanément de vérifier la signature de la donnée E afin de garantir son authenticité,
- Transmet à un serveur biométrique $S_1$ les données E ainsi que l'identifiant de l'équipement EQ,
- Le serveur biométrique $S_1$ récupère les données acquises par l'équipement EQ et compare ces données avec la donnée E doublement déchiffrée afin d'authentifier l'individu,
- Le résultat de l'authentification est transmis au serveur $S_4$ qui avertit l'équipement EQ.

Le procédé peut comporter une phase d'enrôlement d'un individu comportant au moins les étapes suivantes :

- La lecture d'un document d'identité par le terminal mobile,
- L'authentification du document d'identité,
- L'acquisition de données biométriques/biographiques d'un individu par le terminal mobile de l'individu,
- La génération d'un couple clé privée $CP_{vl}$ / clé publique $CP_{ul}$ pour l'individu, par exemple, à partir des caractéristiques biométriques acquises,
- La transmission des données acquises à un dispositif d'authentification $S_4$, qui démarre une séquence d'authentification Seq,
- La création d'un jeton de session si l'authentification est réussie,
- La comparaison par un serveur biométrique des données acquises et des données contenues dans le document d'identité, et enrôlement des données si les données correspondent,
- La transmission des données enrôlées avec une clé publique de l'individu et l'identifiant du terminal mobile de l'individu chiffré par une clé publique d'un serveur de stockage $S_2$ et de mémorisation,
- La mémorisation des identifiants des groupes de données chiffrées par la clé privée de l'individu, dans le terminal mobile.

Pour le stockage des éléments le serveur de stockage $S_2$ exécute, par exemple, au moins les étapes suivantes :

- Sur réception de données enrôlées et présence d'un jeton de session Ja associé à un individu, la séparation des données enrôlées en plusieurs groupes d'éléments E,
- Demande au serveur $S_3$ détenant des couples clé privée $CP_{vS}$ / clé publique $CP_{uS}$ de signer individuellement chaque élément de type E avec la clé privée $CP_{vS}$ de l'autorité $S_3$,
- Chiffrage individuel de chaque élément E' avec la clé privée $CP_{vS}$ de l'autorité $S_3$ puis par la clé publique $CP_{ul}$ de l'individu, $E"=[ CP_{ul}(CP_{vS}(E)]$,
- Mémorisation des éléments doublement chiffrés avec un mécanisme de lien faible.

Les données biométriques/biographiques utilisées sont des données contenues dans un passeport biométrique.

Le procédé peut comporter une étape d'acquisition en temps réel d'une image vidéo de l'individu par un équipement et une étape d'acquisition d'un flux audio.

L'étape de génération de clé privée pour un individu utilise, par exemple, des informations comprises dans un flux audio et un flux d'image propres à l'individu afin de générer un ou plusieurs grands nombres premiers obtenus de la manière suivante, en exécutant en les étapes suivantes :

- Extraire un ensemble de paramètres vocaux d'un flux audio propre à un individu et sélectionner un nombre N de paramètres vocaux par tirage aléatoire,
- Extraire un ensemble de N paramètres visuels d'un flux vidéo,
- Combiner les N paramètres visuels et les N paramètres vocaux issus du tirage aléatoire et générer une matrice A de taille NxN,
- Effectuer une binarisation d'un ensemble de composantes de la matrice A afin de générer un vecteur binaire de taille T,
- Ajouter au moins deux bits de valeur 1 au début et à la fin du vecteur binaire afin d'obtenir un nombre impair,
- Convertir le vecteur en nombre, vérifier si le nombre est un nombre premier,
- si le nombre n'est pas un nombre premier, ajouter un nombre « y » afin d'obtenir le nombre impair suivant,
- Réitérer les étapes d'ajout de la valeur « y » jusqu'à obtenir un nombre premier,
- Générer au moins deux nombres premiers afin d'obtenir un couple clé publique/clé privée

L'invention concerne aussi un système d'identification d'un individu équipé d'un terminal mobile dialoguant avec des équipements selon un protocole de communication comprenant des moyens configurés pour exécuter les étapes du procédé selon l'invention.

Le terminal mobile peut être équipé d'une caméra adaptée à acquérir des données caractéristiques du visage d'un individu et d'un micro adapté à acquérir des données caractéristiques de la voix d'un individu.

D'autres caractéristiques, détails et avantages de l'invention ressortiront à la lecture de la description faite en référence aux dessins annexés donnés à titre d'exemple illustratifs et non limitatifs qui représentent, respectivement :

[Fig. 1], une illustration d'un exemple de système selon l'invention,
[Fig.2], les étapes mises en oeuvre pour l'enrôlement d'une personne et les étapes pour le chiffrement des données,
[Fig.3], les étapes exécutées par le procédé pour authentifier une personne,
[Fig.4], un exemple de mécanisme pour générer des clés de chiffrement/déchiffrement,
[Fig.5], les étapes détaillées du mécanisme de la figure 4.

L'exemple qui suit est donné pour illustrer l'invention sans toutefois limiter sa portée.

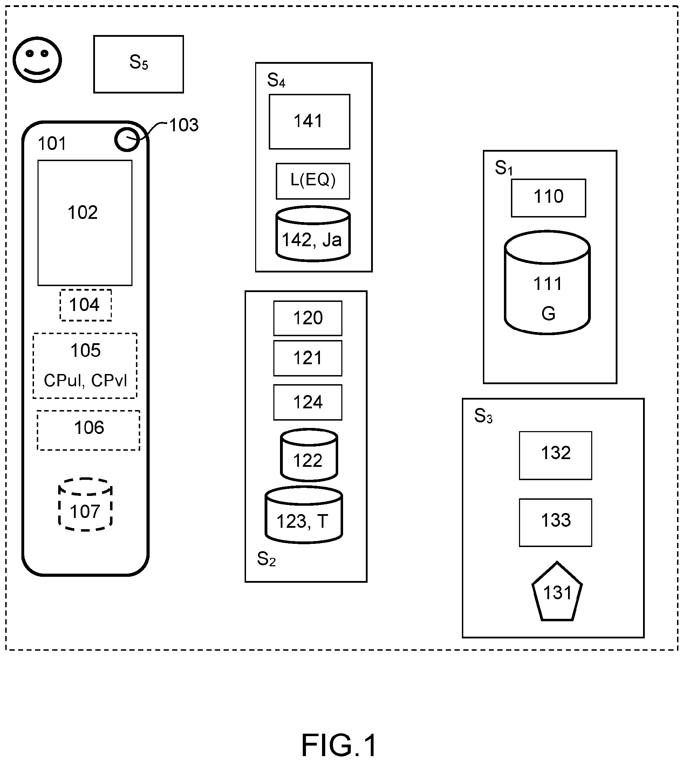

La figure 1 illustre un exemple de système selon l'invention permettant la création d'une « identité numérique » d'un individu 1 équipé d'un terminal mobile 101, tel qu'un téléphone mobile. Le téléphone mobile 101 comprend une interface utilisateur, 102 permettant l'affichage d'informations et de commande, un capteur 103 adapté à capturer ou lire des données propres à l'individu, par exemple une caméra configurée pour prendre une photo du visage, un réseau 104 permettant de transmettre le flux de données correspondant. Le téléphone mobile comprend aussi une application 105 configurée pour générer une clé publique $CP_{ul}$ et une clé privée $CP_{vl}$ propres à l'individu, pour chiffrer et déchiffrer des données. L'application 105 permet aussi de transmettre, via le réseau 104, la clé publique de l'individu afin de sécuriser les données, comme il sera détaillé par la suite. Le terminal mobile comprend aussi un module 106 adapté à lire les informations personnelles de l'individu contenues dans un titre d'identité, par exemple un passeport biométrique ou tout autre support de données personnelles (carte nationale d'identité, etc.). Le terminal mobile comporte une mémoire sécurisée 107 permettant notamment la mémorisation de la clé privée et des identifiants des groupes de données issus des processus d'enrôlements.

Pour mettre en oeuvre le procédé d'identification selon l'invention, le système comprend au moins les quatre serveurs suivants :

- Un serveur $S_1$ biométrique qui réalise les opérations de comparaison biométrique et la détection de faux (« antispoofing »),
- Un serveur $S_2$ de stockage permettant l'enregistrement et la sauvegarde de données propres aux individus,
- Un serveur $S_3$, permettant de signer et chiffrer des données,
- Un serveur $S_4$, dit d'authentification permettant de filtrer l'accès aux ressources, logicielles et données, du système.

Les quatre serveurs et le téléphone mobile de l'utilisateur dialoguent en utilisant des protocoles de communication connus du domaine technique.

Le serveur biométrique $S_1$ est configuré pour identifier un individu. Pour cela, le serveur biométrique comprend une application 110 configurée pour comparer un flux vidéo $F_v$ acquis en temps réel au gabarit du visage d'un individu et pour détecter les attaques. L'application est aussi adaptée à sélectionner une image de meilleure qualité selon un principe connu. Le serveur biométrique $S_1$ possède une mémoire temporelle 111 pour exécuter les étapes de comparaison, mais il ne mémorise aucune information d'identité d'un individu.

Le serveur de stockage $S_2$ permet l'enregistrement des informations associées à l'enrôlement des individus et l'accès à ces informations. Le serveur possède un module 120 qui va réceptionner les données provenant du terminal mobile, les séparer selon le type de données en différents groupes avant de les transmettre pour signature et chiffrement au serveur $S_3$, avec la clé privée du serveur $S_3$. La donnée chiffrée par le serveur $S_3$ est transmise à un module 121 qui va chiffrer cette donnée avec la clé publique de l'individu. Le serveur de stockage $S_2$ comprend également deux espaces mémoires distincts : un premier espace mémoire 122 pour le stockage des couples : {données chiffrées correspondant à un individu $D_c$, Identifiant de la donnée chiffrée $ID_{Dc}$}, un deuxième espace mémoire 123 qui comprend une table de correspondance T composée de couples : {identifiant chiffré d'une donnée chiffrée IDcDc, identifiant du terminal de l'individu $ID_{cl}$}. Le serveur de stockage $S_2$ comprend une application 124 permettant l'accès aux données, module qui fournit les données aux téléphones mobiles sur demande.

Un serveur de signature et chiffrement $S_3$ associé à un coffre-fort sécurisé (type HSM) 131 qui stocke la ou les clés privées d'enrôlement (une clé privée par identité numérique) et une application 132 permettant de signer, chiffrer ou déchiffrer les données au moyen de la clé privée. Le serveur $S_3$ possède un module 133 pour retransmettre une donnée chiffrée et signée au serveur $S_2$. L'utilisation de la clé publique de $S_3$ qui permet de vérifier l'authenticité d'une signature n'est pas décrite dans le système.

Un serveur d'authentification $S_4$ est configuré pour authentifier l'individu, par exemple par reconnaissance faciale. Le serveur d'authentification $S_4$ a dans sa mémoire une liste d'équipements L(EQ) autorisés à identifier un individu et une application 141 configurée pour demander au serveur biométrique $S_1$ de créer une séquence d'identification Seq à partir d'un gabarit d'image et du flux vidéo Fv d'un équipement. Le serveur d'authentification comporte aussi une mémoire temporelle 142 stockant les jetons d'authentification Ja.

Le système comporte en outre un serveur $S_5$ permettant de garantir l'authenticité du titre d'identité présenté par l'individu. Cette étape est connue de l'homme du métier et ne sera pas détaillée.

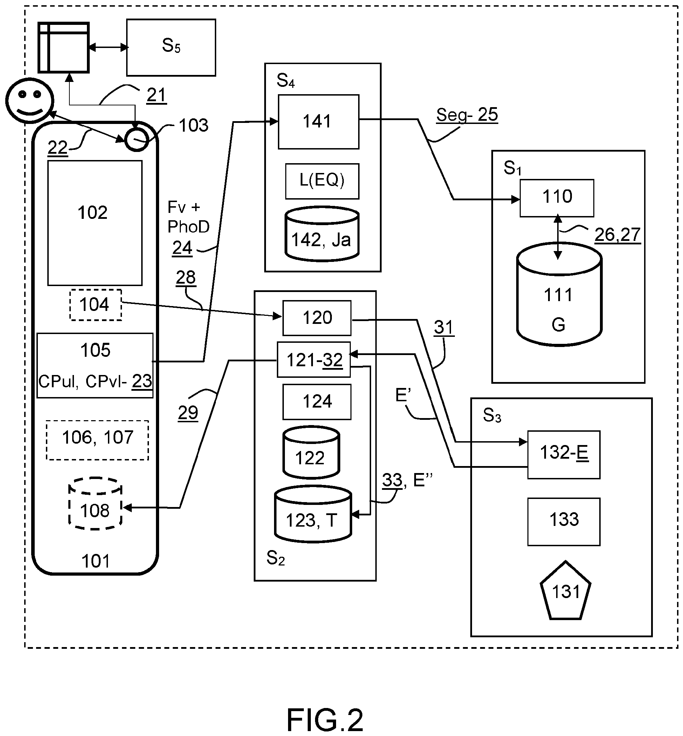

La figure 2 illustre une succession d'étapes mises en oeuvre lorsqu'un individu veut s'enrôler au niveau de son téléphone mobile.

Les clés utilisées dans le système d'identification sont :

- Le couple clé privée $CP_{vl}$ / clé publique $CP_{ul}$, d'un individu,
- La clé publique de $S_2$ permettant de sécuriser le transport des données entre le terminal mobile et le serveur $S_2$, $CP_{ut}$,
- Le couple clé privée $CP_{vS}$ / clé publique $CP_{uS}$, d'une autorité $S_3$.

Les clés publiques seront distribuées de la manière suivante : la clé publique du terminal mobile $CP_{ul}$ est transmise au serveur $S_2$, la clé publique $CP_{ut}$ de $S_2$ est transmise au terminal mobile, la clé publique $CP_{uS}$ de $S_3$ n'est pas distribuée.

Un individu va s'enrôler sur son téléphone mobile en exécutant les étapes suivantes :

- 21- Lors d'une première étape, l'individu utilise son téléphone mobile 101 pour lire son passeport biométrique avec une application de lecture installée sur son téléphone, l'authenticité du passeport est vérifiée 21a par le serveur de contrôle de document $S_5$,
- 22- L'individu se filme avec la caméra frontale de son téléphone mobile via une application installée sur ton téléphone, il en résulte un flux vidéo $F_v$ de données,
- 23 - L'application génère un couple clé privée $CP_{vl}$ / clé publique $CP_{ul}$ pour l'individu à partir des caractéristiques biométriques issues du flux vidéo,
- 24 - Le flux de données $F_v$ pris par la caméra frontale et la photo issue du document d'identité PhoD sont transmis au serveur d'authentification $S_4$, via un protocole de communication classique,

- 25 - Le serveur d'authentification $S_4$ commande au serveur biométrique $S_1$ de démarrer une séquence d'authentification Seq dont le résultat, s'il est positif, créera un jeton de session Ja pour l'enrôlement de l'individu,
- 26 - Le serveur biométrique $S_1$ utilise la photo du document d'identité PhoD (contenue dans la puce du passeport ou sur la page imprimée) pour la comparer aux données contenues dans le flux vidéo $F_v$ provenant de la caméra du téléphone mobile afin d'authentifier l'individu (par exemple par reconnaissance faciale),
- 27 - Ce même serveur biométrique $S_1$, identifie la photo de meilleure qualité du flux vidéo, génère un gabarit de la photo afin de l'ajouter au dossier d'enrôlement qui sera transmis au serveur $S_2$ pour mémorisation,
- 28 - L'application du téléphone mobile transmet ensuite les données enrôlées accompagnées de la clé publique de l'individu et de l'identifiant du terminal mobile chiffré $ID_{cl}$ par la clé publique $CP_{ut}$, du serveur $S_2$, au serveur $S_2$ en charge de stocker ces informations dans le premier espace de stockage,
- 29 - Le téléphone mobile reçoit en retour du serveur $S_2$, après traitement (si la donnée est sauvegardée sans erreur), les identifiants des groupes de données qu'il stocke chiffrés par la clé privée $CP_{vl}$ de l'individu dans la mémoire de l'appareil mobile.

A la fin des étapes d'enrôlement, le téléphone mobile a en mémoire les identifiants des groupes des données chiffrées par sa clé et le serveur $S_2$ de stockage les données enrôlées d'un individu et l'identifiant d'un téléphone mobile chiffré.

La figure 2 illustre aussi les étapes mises en oeuvre pour le stockage des données ou informations d'enrôlement.

Lorsque le serveur de stockage $S_2$ reçoit les informations d'un enrôlement (données enrôlées), celui-ci vérifie la présence d'un jeton de session Ja auprès du serveur d'authentification $S_4$ et sépare les données reçues en groupes d'éléments E selon leur nature (photo du visage, empreinte, information biographique, etc.).

Le serveur de stockage $S_2$ demande au serveur $S_3$ détenant des couples clé privée $CP_{vS}$ / clé publique $CP_{uS}$ de signer individuellement chaque élément de type E avec la clé privée de l'autorité $CP_{vS}$.

- 31 - Le serveur de stockage $S_2$ demande au serveur $S_3$ de chiffrer individuellement chaque élément avec la clé privée de l'autorité $CP_{vS}$. Il en résulte des éléments de type E'= paramètres chiffrés avec la clé privée de l'autorité,
- 32 - Le serveur $S_2$ chiffre individuellement chaque élément E' avec la clé publique $CP_{ul}$ de l'individu. Il en résulte des éléments E"= paramètre initial E doublement chiffré, par la clé privée $CP_{vS}$ de l'autorité $S_3$ puis par la clé publique $CP_{ul}$ de l'individu, E"=[ $CP_{ul}(CP_{vS}(E)]$,
- 33 - Le serveur $S_2$ stocke les éléments E" avec un mécanisme de lien faible selon un protocole connu de l'homme du métier et efface les données E et E' de sa mémoire, afin d'éviter toute possibilité de reconstruire les données propres à un individu.

En fonction de l'usage, il est possible de prévoir une durée de vie de ces données doublement chiffrées. A l'expiration du délai les données biométriques non chiffrées et chiffrées sont supprimées par un processus dédié.

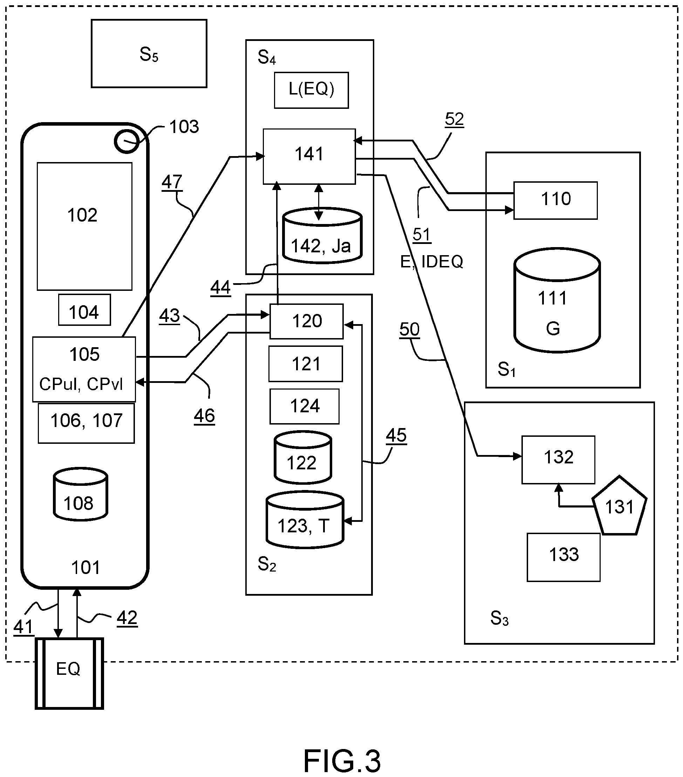

La figure 3 illustre les étapes exécutées lorsque l'individu va vouloir s'identifier au moyen d'un dispositif externe. L'exemple donné à titre illustratif concerne l'identification d'un individu dans une zone équipée de plusieurs dispositifs de contrôle comprenant des portes d'accès.

Lorsqu'un individu enrôlé pénètre sur un lieu équipé d'un système d'identification, l'individu reçoit une notification sur son téléphone mobile pour lui demander de s'authentifier et le consentement de l'identifier par la biométrie durant son parcours. Cette phase d'authentification consiste, par exemple, à présenter la puce électronique de son passeport biométrique au téléphone mobile afin d'en extraire les données de la photo, via le protocole NFC, et à comparer ces données aux données contenues dans le flux vidéo de son visage acquis en temps réel par la caméra du terminal mobile. Si l'authentification réussi, un jeton de session Ja est créé. Le consentement de l'individu est également enregistré. La liste des équipements L(EQ) présents dans le lieu est téléchargée sur le téléphone mobile qui va se mettre à la recherche des équipements du système d'identification par un mécanisme de Bluetooth Low Energy (BLE), par exemple. La transmission des données entre les différents acteurs du système est réalisée grâce à un protocole de communication et au réseau connu de l'homme du métier.

- 41 - Lorsque l'individu qui a donné son consentement approche d'un équipement EQ du système de contrôle habilité par l'autorité (e-gate, kiosque ...), une application du téléphone mobile mesure la distance entre l'individu et l'équipement EQ, au moyen d'une technique connue. Lorsque l'individu est suffisamment proche d'un équipement EQ, l'association logique entre l'équipement et son téléphone mobile est automatiquement établie,
- 42 - L'équipement EQ demande au téléphone mobile de fournir les données nécessaires à l'identification de l'individu,
- 43 - Le téléphone mobile interroge le serveur $S_2$ pour récupérer les données nécessaires à l'identification. Pour cela, le téléphone mobile transmet son identifiant au serveur $S_2$,
- 44 - Le serveur $S_2$ va vérifier l'existence d'un jeton de session auprès du serveur $S_4$,

- 45 - Le serveur $S_2$ consulte sa table de correspondance T afin de trouver les données chiffrées E" associées à l'élément transmis et donc à l'individu.
- 46 - Le serveur $S_2$ transmet ces données E" doublement chiffrées au téléphone mobile,
- 47 - Le téléphone mobile déchiffre les données E" avec la clé privée de l'individu $CP_{vl}$ afin d'obtenir une donnée de type E' (donnée qui a été chiffrée avec la clé privée du serveur $S_3$) qu'il envoie au serveur d'authentification $S_4$. La donnée E' est encore chiffrée par la clé de chiffrement de $S_3$.

Le serveur d'authentification $S_4$ exécute ensuite les étapes suivantes :

- 50 - $S_4$ demande au serveur $S_3$ le déchiffrement de la donnée E' avec la clé privée du serveur $S_3$, $CP_{vS}$, afin d'obtenir une donnée de type E et demande également la vérification de la signature de la donnée E, afin de garantir son authenticité,

- 51 - $S_4$ transmet au serveur biométrique $S_1$ la donnée de type E, ainsi que l'identifiant de l'équipement EQ. Le serveur biométrique lance un processus pour récupérer la vidéo de l'équipement EQ et compare les données de cette vidéo avec la donnée biométrique E afin d'authentifier l'individu,

- 52 - Le serveur biométrique $S_1$ transmet le résultat de l'identification au serveur $S_4$. Dans le cas où l'identification est réussie, alors le serveur $S_4$ va transmettre ce résultat à l'équipement EQ afin que ce dernier puisse laisser passer l'individu.

Dans le cas où l'authentification a échoué, alors le serveur $S_4$ transmet ce résultat à l'équipement qui ne donne pas l'accès à l'individu.

En fin d'opération, le serveur $S_1$ efface les données E de la mémoire du processus. A la fin de chaque opération, les serveurs effacent de leur mémoire les données biométriques qui pourraient faire l'objet d'attaque.

La méthode de génération d'une clé privée consiste à exploiter un flux audio, par exemple une phrase prononcée par un individu et un flux d'image contenant des paramètres caractéristiques de l'individu pour générer des « grands nombres premiers » qui permettront de générer un couple clé privée / clé publique

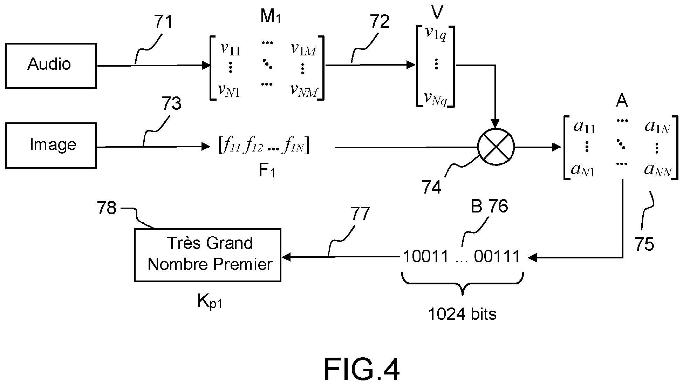

La figure 4 illustre un exemple de génération d'une clé privée à partir des informations comprises dans un flux audio, par exemple, la phrase prononcée par un individu et un flux vidéo à partir d'une vidéo acquise du visage de l'individu.

La méthode de génération d'une clé privée consiste à exploiter un flux audio, par exemple une phrase prononcée par un individu et un flux vidéo contenant des paramètres caractéristiques de l'individu pour générer un « grand nombre premier » qui permet d'extraire une clé privée.

A partir du flux audio acquis par le capteur audio, le processeur va extraire, plusieurs vecteurs caractéristiques 71, appelées vecteurs acoustiques (paramètres vocaux), issus des points d'intérêts de la voix. Les points d'intérêts de la voix sont des paramètres biométriques audio caractérisant la voix d'un individu.

Ces vecteurs acoustiques $V_{ij}$ sont stockés dans une matrice M1 de taille NxM, où N est la taille des vecteurs et M est le nombre des vecteurs extraits.

Lors de l'étape suivante, 72, on utilise un logiciel de tirage aléatoire sur les composantes des vecteurs de la matrice $M_1$, afin d'extraire un ensemble de paramètres $V_{kl}$ des caractéristiques vocales, se présentant sous la forme d'une matrice une colonne V de taille N. La valeur de N est, par exemple choisie en fonction des caractéristiques du signal de parole échantillonné.

En parallèle, le procédé extrait, 73, les paramètres visuels d'une image issue d'une vidéo acquise par un capteur vidéo et représentant le visage d'un individu. Ces éléments sont mémorisés sous la forme d'un vecteur $F_1$ de taille N caractérisé par des vecteurs caractéristiques visuels $f_{mn}$. Les paramètres visuels représentent des points d'intérêts qui correspondent à la position dans le visage des zones d'intérêts (yeux, nez, bouche, contour, sourcils).

Puis, le procédé va multiplier le vecteur colonne de la matrice V avec le vecteur ligne $F_1$ des caractéristiques visuelles, 74. Le résultat se présente sous la forme d'une matrice carrée A de taille NxN, avec des composantes $A_{mn}$.

En effectuant une binarisation d'un ensemble {Aj} de valeurs de la matrice A choisies d'une façon aléatoire, un vecteur binaire de taille (T-nbre de bits qui seront ajoutés) est généré, 75. La taille T correspond au nombre de bits dans la clé générée, par exemple 510, 1022, 2046. Ensuite, on ajoute au moins deux bits ayant une valeur x= « 1 » au début et à la fin du vecteur binaire, 76 (ceci garantit que le nombre est assez grand et impair). Un bit est ajouté au début (à droite) afin de garantir que le chiffre obtenu est impair et un bit est ajouté à la fin (à gauche) afin de garantir que le chiffre soit plus grand si ce bit est égal à zéro ; Puis, le vecteur binaire B obtenu est converti en nombre K assez grand). K est la représentation décimale du vecteur binaire.

La taille finale de vecteur correspond au nombre de bits dans la clé générée, et sera par exemple égale à 512, 1024, ou 2048. Puis, le vecteur binaire B obtenu est converti en nombre K assez grand, le nombre de chiffres choisi pour K est notamment fonction de la sécurité requise pour l'application. K est la représentation décimale du vecteur binaire ;

Par exemple, pour un vecteur binaire de taille 512 bits, K est un nombre décimal avec 155 chiffres, pour 1024 bits K contient 309 chiffres et pour 2048 bits K contient 617 bits.

On vérifie si ce nombre K est un nombre premier, 77. Si le résultat du test indique que le nombre K n'est pas premier, on ajoute un nombre y= « 2 », par exemple, au nombre K pour obtenir le nombre impair suivant et on recommence l'opération d'ajout du nombre « 2 ». Ceci est répété un nombre de fois suffisant afin de trouver un nombre premier Kp, 78. La vérification peut se faire en utilisant le test de Miller-Rabin connu de l'homme du métier.

Les opérations sont répétées un nombre de fois suffisant pour trouver au moins deux grands nombres premiers $GP_1$, $GP_2$ d'au moins 1024 bits soit environ 308 chiffres.

A partir des deux grands nombres premiers $GP_1$, $GP_2$ et en utilisant un algorithme de type RSA, il sera possible de trouver une clé privée et une clé publique $K_{p1}$, $K_{p2}$.

Les valeurs x=1 et y=2 sont données à titre illustratif. La valeur de x est choisie de façon à obtenir un premier nombre premier et la valeur de y peut être égale à 2, 4, ou tout nombre pair qui permettra d'obtenir un nombre impair suivant.

Après la génération des clés, les informations éventuellement contenues dans la mémoire sont supprimées par le procédé.

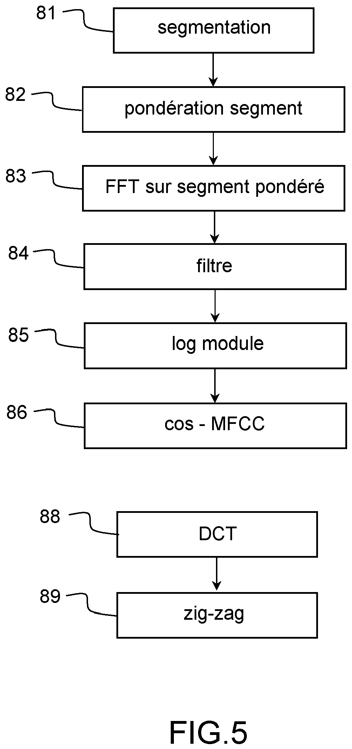

Il existe, dans la littérature, plusieurs types de vecteurs acoustiques. Les vecteurs acoustiques les plus utilisés dans le traitement de parole sont basés sur les coefficients cepstraux connus sous l'abréviation anglo-saxonne « MFCCs » (Mel-Frequency Cepstral Coefficients). Ces coefficients prennent en compte les propriétés du système auditif humain. La figure 5 illustre un exemple d'étapes exécutées par le processeur sur le flux audio et sur le flux vidéo, signal de parole et image vidéo par exemple, enregistrés, par exemple :

- 81 - Le signal de parole est découpé en segments de tailles fixes (entre 20 et 50 ms),

- 82 - Chaque segment est pondéré par une fenêtre de Hamming,

- 83 - Une transformée de Fourier rapide est appliquée à chaque segment,

- 84 - Un filtrage de type MEL est réalisé sur les segments transformés (Le filtre de MEL est un banc de filtres triangulaires qui se chevauchent et qui modélisent l'appareil auditif humain).

- La fonction de Mel s'exprime en fonction de la fréquence par :

$$M(f) = 2595 log_{10}\left(1 + \frac{f}{700}\right)$$

- La réponse de chacun des filtres est illustrée par :

- $Y(l) = \sum_{k=0}^{\frac{N}{2}} X(f) M_l(f)$ où l=1, 2, ....,M, X(f) est le spectre du signal de parole, et $M_l(f)$ la fonction de transfert du filtre,

- 85 - A la sortie de chaque filtre le logarithme du module (ou l'amplitude) de signal filtré est conservé

- 86 - Puis l'étape suivante consiste à appliquer une transformation en cosinus discrète sur le logarithme du module pour obtenir les coefficients MFCC. Pendant cette étape le nombre des vecteurs MFCCs par segment est défini :

- $MFCC(i) = \sqrt{\frac{2}{L}} \sum_{m=1}^{L} log\left(|Y(m)| cos\left(\frac{\pi i}{L}(m - 0.5)\right)\right)$ où L est le nombre de filtres de Mel et i l'indice du coefficient MFCC.

La méthode détaillée pour générer les clés a été donnée à titre illustratif et nullement limitatif. Toute méthode de génération de clés de cryptographie asymétrique pourra être utilisée.

Par exemple, pour un signal de parole durant deux secondes, une taille de segment de 20 ms, un nombre de MFCCs par segment égal à N=30, on obtient M=200 vecteurs caractéristiques de taille 30.

Comme pour la parole, il existe plusieurs types de paramètres visuels. L'une des techniques classiques pour extraire les paramètres visuels est la transformée en cosinus discrète (Discrète Cosine Transform - DCT). Cette technique est très utilisée dans le domaine de compression d'image.

Pour le traitement du flux vidéo. Une fois la zone d'intérêt déterminée, la technique DCT est appliquée sur l'intensité des pixels contenus dans cette zone. Le résultat de cette opération est une matrice DCT, 88. A partir de cette matrice le vecteur caractéristique visuel de taille N est extrait selon le principe du « zig-zag », 89.

Le procédé et le système selon l'invention offrent les avantages suivants. L'opération de double chiffrement assure que la donnée est intègre et sécurisée, non exploitable sans autorisation de l'usage et de l'autorité. En cas d'attaque, il n'est pas possible d'obtenir toutes les clés de tous les individus.

## Revendications

1. Procédé pour identifier un individu (1) équipé d'un terminal mobile (101) dans un système comportant un ou plusieurs équipements de contrôle EQ **caractérisé en ce qu'**il comporte au moins les étapes suivantes :

   - L'individu donne son consentement à un équipement de contrôle EQ et s'authentifie,
   - Une association logique entre l'équipement et le terminal mobile d'un individu est établie lorsque la distance entre l'individu et l'équipement EQ est inférieure à une valeur seuil (41),
   - L'équipement EQ lance une séquence d'acquisition de données biométriques (42),
   - Le terminal mobile transmet un élément caractéristique à un serveur de stockage $S_2$ afin de récupérer des données biométriques/biographiques,
   - Le serveur de stockage $S_2$ vérifie l'existence d'un jeton de session auprès d'un serveur $S_4$ d'authentification et consulte une table de correspondance contenant le lien vers des données chiffrées caractéristiques de l'individu, (44),
   - Le serveur de stockage transmet des données chiffrées E" au terminal mobile qui utilise une clé privée de l'individu afin de déchiffrer les données E", (46),
   - Les données déchiffrées E' sont transmises au serveur d'authentification qui exécute les étapes suivantes :
   - Demande à une autorité $S_3$ de déchiffrer les données chiffrées E' avec une clé privée de l'autorité $S_3$, afin d'obtenir les données E propres à l'individu et demande simultanément de vérifier la signature de la donnée E afin de garantir son authenticité,
   - Transmet à un serveur biométrique $S_1$ les données E ainsi que l'identifiant de l'équipement EQ,
   - Le serveur biométrique $S_1$ récupère les données acquises par l'équipement EQ et compare ces données avec la donnée E doublement déchiffrée afin d'authentifier l'individu,
   - Le résultat de l'authentification est transmis au serveur $S_4$ qui avertit l'équipement EQ.

2. Procédé selon la revendication 1 **caractérisé en ce qu'**il comporte une phase d'enrôlement d'un individu comportant au moins les étapes suivantes :

   - Lecture d'un document d'identité par le terminal mobile, (21),
   - Authentification du document d'identité, (21a),
   - Acquisition de données biométriques/biographiques d'un individu par le terminal mobile de l'individu, (22),
   - Génération d'un couple clé privée CPvl / clé publique CPul pour l'individu, (23),
   - Transmission des données acquises à un dispositif d'authentification $S_4$, (24), qui démarre une séquence d'authentification Seq, (25),
   - Création d'un jeton de session si l'authentification est réussie,
   - Comparaison par un serveur biométrique des données acquises et des données contenues dans le document d'identité (26), et enrôlement des données si les données correspondent, (27),
   - Transmission des données enrôlées avec une clé publique de l'individu et l'identifiant du terminal mobile de l'individu chiffré par une clé publique d'un serveur de stockage $S_2$ et mémorisation, (28),
   - Mémorisation des identifiants des groupes de données chiffrés par la clé privée de l'individu, dans le terminal mobile (29).

3. Procédé selon la revendication 2 **caractérisé en ce que** l'on génère un couple clé privée/clé publique à partir de caractéristiques biométriques.

4. Procédé selon l'une des revendications 2 ou 3 **caractérisé en ce que** pour le stockage des éléments le serveur de stockage $S_2$ exécute au moins les étapes suivantes :

   - Sur réception de données enrôlées et présence d'un jeton de session Ja associé à un individu, séparation des données enrôlées en plusieurs groupes d'éléments E,
- Demande au serveur $S_3$ détenant des couples clé privée $CP_vS$ / clé publique $CP_{uS}$ de signer individuellement chaque élément de type E avec la clé privée $CP_{vS}$ de l'autorité $S_3$, (31),
- Chiffrage individuel de chaque élément E' avec la clé privée $CP_{vS}$ de l'autorité $S_3$ puis par la clé publique $CP_{ul}$ de l'individu, $E''=[ CP_{ul}(CP_{vS}(E)]$, (32),
- Mémorise des éléments doublement chiffrés avec un mécanisme de lien faible (33).

**5.** Procédé selon l'une des revendications 1 à 3 **caractérisé en ce qu'**il utilise comme données biométriques/biographiques des données contenues dans un passeport biométrique.

**6.** Procédé selon l'une des revendications 1 à 4 **caractérisé en ce qu'**il comporte une étape d'acquisition en temps réel d'une image vidéo de l'individu par un équipement et d'un flux audio.

**7.** Procédé selon la revendication 5 **caractérisé en ce que** l'étape de génération d'un couple de clés comporte les étapes suivantes :

- extraire (71) un ensemble de paramètres vocaux d'un flux audio propre à un individu et sélectionner un nombre N de paramètres vocaux par tirage aléatoire (72),
- extraire (73) un ensemble de N paramètres visuels d'un flux vidéo,
- combiner (74) les N paramètres visuels et les N paramètres vocaux issus du tirage aléatoire et générer une matrice A de taille NxN,
- effectuer (75) une binarisation d'un ensemble de composantes de la matrice A afin de générer un vecteur binaire de taille T,
- ajouter au moins deux bits de valeur x au début et à la fin du vecteur binaire afin d'obtenir un nombre impair,
- convertir le vecteur en nombre, vérifier si le nombre est un nombre premier, (77),
- si le nombre n'est pas un nombre premier, ajouter un nombre « y » afin d'obtenir le nombre impair suivant,
- réitérer les étapes d'ajout de la valeur « y » jusqu'à obtenir un nombre premier, (78),
- générer au moins deux nombres premiers afin d'obtenir un couple de clé publique/clé privée.

**8.** Système pour identifier un individu (1) équipé d'un terminal mobile (101) comprenant des moyens configurés pour mettre en oeuvre les étapes du procédé selon la revendication 1.

**9.** Système selon la revendication 8 **caractérisé en ce que** le terminal mobile est équipé d'une caméra adaptée à acquérir des données caractéristiques du visage d'un individu et d'un micro adaptée à acquérir des données caractéristiques de la voix d'un individu.

**10.** Système selon la revendication 9 **caractérisé en ce que** le terminal mobile comporte un module configuré pour générer un couple clé publique/clé privée pour un chiffrement asymétrique en exécutant les étapes suivantes :

- extraire (71) un ensemble de paramètres vocaux d'un flux audio propre à un individu et sélectionner un nombre N de paramètres vocaux par tirage aléatoire (72),
- extraire (73) un ensemble de N paramètres visuels d'un flux vidéo,
- combiner (74) les N paramètres visuels et les N paramètres vocaux issus du tirage aléatoire et générer une matrice A de taille NxN,
- effectuer (75) une binarisation d'un ensemble de composantes de la matrice A afin de générer un vecteur binaire de taille T,
- ajouter au moins deux bits de valeur x au début et à la fin du vecteur binaire afin d'obtenir un nombre impair,
- convertir le vecteur en nombre, vérifier si le nombre est un nombre premier, (77),
- si le nombre n'est pas un nombre premier, ajouter un nombre « y » afin d'obtenir le nombre impair suivant,
- réitérer les étapes d'ajout de la valeur « y » jusqu'à obtenir un nombre premier, (78),
- générer au moins deux nombres premiers afin d'obtenir un couple de clé publique/clé privée.

## Patentansprüche

**1.** Verfahren zur Identifizierung einer Person (1), die mit einem mobilen Endgerät (101) ausgestattet ist, in einem System, das eine oder mehrere Steuereinrichtungen EQ umfasst, **dadurch gekennzeichnet, dass** es mindestens die folgenden Schritte umfasst:

- die Person gibt einer Steuereinrichtung EQ ihre Einwilligung und authentifiziert sich,
- eine logische Zuweisung zwischen der Einrichtung und dem mobilen Endgerät einer Person wird hergestellt, wenn der Abstand zwischen der Person und der Einrichtung EQ kleiner als ein Schwellenwert ist, (41),
- die Einrichtung EQ eine Erfassungssequenz von biometrischen Daten einleitet, (42),
- das mobile Endgerät überträgt ein charakteristisches Element an einen Speicherserver $S_2$, um biometrische/biografische Daten abzurufen,
- der Speicherserver $S_2$ überprüft das Vorhandensein eines Sitzungstokens bei einem Authentifizierungsserver $S_4$ und zieht eine Zuordnungstabelle heran, die die Verknüpfung zu verschlüsselten charakteristischen Daten der Person enthält, (44),
- der Speicherserver überträgt verschlüsselte Daten E" an das mobile Endgerät, das einen privaten Schlüssel der Person verwendet, um die Daten E" zu entschlüsseln (46),
- die entschlüsselten Daten E' werden an den Authentifizierungsserver übertragen, der die folgenden Schritte ausführt:
- Anfordern an eine Autorität $S_3$, die verschlüsselten Daten E' mit einem privaten Schlüssel der Autorität $S_3$ zu entschlüsseln, um die der Person eigenen Daten E zu erhalten, und gleichzeitiges Anfordern, die Signatur des Datums E zu überprüfen, um dessen Authentizität zu garantieren,
- Übertragen der Daten E sowie der Kennung der Einrichtung EQ an einen biometrischen Server $S_1$,
- der biometrische Server $S_1$ ruft die von der Einrichtung EQ erfassten Daten ab und vergleicht diese Daten mit dem doppelt verschlüsselten Datum E, um die Person zu authentifizieren,
- das Ergebnis der Authentifizierung wird an den Server $S_4$ übertragen, der die Einrichtung EQ benachrichtigt.

2. Verfahren nach Anspruch 1, **dadurch gekennzeichnet, dass** es eine Eingliederungsphase einer Person umfasst, umfassend mindestens die folgenden Schritte:

- Lesen eines Identitätsdokuments durch das mobile Endgerät, (21),
- Authentifizieren des Identitätsdokuments, (21a),
- Erfassen von biometrischen/biografischen Daten einer Person durch das mobile Endgerät der Person, (22),
- Generieren eines Paares aus einem privaten Schlüssel Cpvl und einem öffentlichen Schlüssel Cpul für die Person, (23),
- Übertragen der erfassten Daten an eine Authentifizierungsvorrichtung $S_4$ (24), die eine Authentifizierungssequenz Seq startet, (25),
- Schaffen eines Sitzungstokens, wenn die Authentifizierung erfolgreich ist,
- Vergleichen, durch einen biometrischen Server, der erfassten Daten und der in dem Identitätsdokument enthaltenen Daten (26) und Eingliedern der Daten, wenn die Daten übereinstimmen, (27),
- Übertragen und Speichern der eingegliederten Daten mit einem öffentlichen Schlüssel der Person und der Kennung des mobilen Endgeräts der Person, die mit einem öffentlichen Schlüssel eines Speicherservers $S_2$ verschlüsselt ist, (28),
- Speichern der Kennungen der Datengruppen, die durch den privaten Schlüssel der Person verschlüsselt sind, in dem mobilen Endgerät, (29).

3. Verfahren nach Anspruch 2, **dadurch gekennzeichnet, dass** ein Paar aus einem privaten Schlüssel und einem öffentlichen Schlüssel anhand von biometrischen Kennzeichen generiert wird.

4. Verfahren nach einem der Ansprüche 2 oder 3, **dadurch gekennzeichnet, dass** für das Speichern der Elemente der Speicherserver $S_2$ mindestens die folgenden Schritte ausführt:

- bei Empfang von eingegliederten Daten und Vorliegen eines Sitzungstokens Ja, das einer Person zugeordnet ist, Trennen der eingegliederten Daten in mehrere Gruppen von Elementen E,
- Anfordern an den Server $S_3$, der die Paare aus privatem Schlüssel $CP_vS$ und öffentlichem Schlüssel $Cp_uS$ enthält, jedes Element vom Typ E mit dem privaten Schlüssel $Cp_vS$ der Autorität $S_3$ individuell zu signieren, (31),
- individuelles Entschlüsseln jedes Elements E' mit dem privaten Schlüssel $CP_vS$ der Autorität $S_3$, dann durch den öffentlichen Schlüssel $Cp_ul$ der Person, $E"=[CP_{ul}(CP_{vS}(E)]$, (32),
- Speichern der doppelt verschlüsselten Elemente mit einem schwachen Verknüpfungsmechanismus, (33).

5. Verfahren nach einem der Ansprüche 1 bis 3, **dadurch gekennzeichnet, dass** es als biometrische/biografische Daten Daten nutzt, die in einem biometrischen Pass enthalten sind.

6. Verfahren nach einem der Ansprüche 1 bis 4, **dadurch gekennzeichnet, dass** es einen Erfassungsschritt in Echtzeit eines Videobildes der Person durch eine Einrichtung und eines Audiostreams umfasst.

7. Verfahren nach Anspruch 5, **dadurch gekennzeichnet, dass** der Schritt des Generierens eines Schlüsselpaares die folgenden Schritte umfasst:

- Extrahieren (71) eines Satzes von Sprachparametern aus einem Audiostream, der einer Person eigen ist, und Auswählen einer Anzahl N von Sprachparametern durch Zufallsauswahl (72),
- Extrahieren (73) eines Satzes von N visuellen Parametern aus einem Videostream,
- Kombinieren (74) der N visuellen Parameter und der N Sprachparameter, die sich aus der Zufallsauswahl ergeben, und Generieren einer Matrix A der Größe NxN,
- Bewirken (75) einer Binärisierung eines Satzes von Bestandteilen der Matrix A, um einen binären Vektor der Größe T zu generieren,
- Hinzufügen von mindestens zwei Bits mit dem Wert x zu Beginn und am Ende des binären Vektors, um eine ungerade Zahl zu erhalten,
- Umwandeln des Vektors in eine Zahl, Überprüfen, ob die Zahl eine Primzahl ist, (77),
- wenn die Zahl keine Primzahl ist, Hinzufügen einer Zahl "y", um die folgende ungerade Zahl zu erhalten,
- Wiederholen der Schritte des Hinzufügens des Wertes "y", bis eine Primzahl erhalten wird, (78),
- Generieren von mindestens zwei Primzahlen, um ein Paar aus einem öffentlichen Schlüssel und einem privaten Schlüssel zu erhalten.

8. System zur Identifizierung einer Person (1), die mit einem mobilen Endgerät (101) ausgestattet ist, umfassend Mittel, die dafür konfiguriert sind, die Schritte des Verfahrens nach Anspruch 1 durchzuführen.

9. System nach Anspruch 8, **dadurch gekennzeichnet, dass** das mobile Endgerät mit einer Kamera, die dafür geeignet ist, charakteristische Daten des Gesichts einer Person zu erfassen, und mit einem Mikrofon ausgestattet ist, das dafür geeignet ist, charakteristische Daten der Stimme einer Person zu erfassen.

10. System nach Anspruch 9, **dadurch gekennzeichnet, dass** das mobile Endgerät ein Modul umfasst, das dafür konfiguriert ist, ein Paar aus einem öffentlichen Schlüssel und einem privaten Schlüssel für eine asymmetrische Verschlüsselung zu generieren, indem die folgenden Schritte aufgeführt werden:

- Extrahieren (71) eines Satzes von Sprachparametern aus einem Audiostream, der einer Person eigen ist, und Auswählen einer Anzahl N von Sprachparametern durch Zufallsauswahl, (72),
- Extrahieren (73) eines Satzes von N visuellen Parametern aus einem Videostream,
- Kombinieren (74) der N visuellen Parameter und der N Sprachparameter, die sich aus der Zufallsauswahl ergeben, und Generieren einer Matrix A der Größe NxN,
- Bewirken (75) einer Binärisierung eines Satzes von Bestandteilen der Matrix A, um einen binären Vektor der Größe T zu generieren,
- Hinzufügen von mindestens zwei Bits mit dem Wert x zu Beginn und am Ende des binären Vektors, um eine ungerade Zahl zu erhalten,
- Umwandeln des Vektors in eine Zahl, Überprüfen, ob die Zahl eine Primzahl ist (77),
- wenn die Zahl keine Primzahl ist, Hinzufügen einer Zahl "y", um die folgende ungerade Zahl zu erhalten,
- Wiederholen der Schritte des Hinzufügens des Wertes "y", bis eine Primzahl erhalten wird, (78),
- Generieren von mindestens zwei Primzahlen, um ein Paar aus einem öffentlichen Schlüssel und einem privaten Schlüssel zu erhalten.

**Claims**

1. A method for identifying an individual (1) equipped with a mobile terminal (101) in a system comprising one or more items of control equipment EQ, **characterised in that** it comprises at least the following steps:

- the individual granting their consent to an item of control equipment EQ and self-authenticating;
- establishing (41) a logical association between the item of equipment and the mobile terminal of an individual when the distance between the individual and the item of equipment EQ is below a threshold value;
- the item of equipment EQ launching (42) a biometric data acquisition sequence;
- the mobile terminal transmitting a characteristic element to a storage server $S_2$ in order to retrieve biometric/biographic data;

- the storage server $S_2$ checking (44) the existence of a session token with an authentication server $S_4$ and consulting a table of correspondence containing the link to encrypted data characteristic of the individual;
- the storage server transmitting (46) encrypted data E" to the mobile terminal, which uses a private key of the individual to decrypt the data E";
- transmitting the decrypted data E' to the authentication server, which executes the following steps:
- requesting, from an authority $S_3$, to decrypt the encrypted data E' with a private key of the authority $S_3$, in order to obtain the specific data E of the individual and at the same time request to check the signature of the data E in order to guarantee its authenticity;
- transmitting the data E and the identifier of the item of equipment EQ to a biometric server $S_1$;
- the biometric server $S_1$ retrieving the data acquired by the item of equipment EQ and comparing this data with the twice-decrypted data E in order to authenticate the individual;
- transmitting the result of the authentication to the server $S_4$, which notifies the item of equipment EQ.

2. The method as claimed in claim 1, **characterised in that** it comprises a phase of enrolling an individual comprising at least the following steps:

   - the mobile terminal reading (21) an identity document;
   - authenticating (21a) the identity document;
   - acquiring (22) biometric/biographic data of an individual, using the mobile terminal of the individual;
   - generating (23) a private key CPvl/public key CPul pair for the individual;
   - transmitting (24) the acquired data to an authentication device $S_4$, which starts (25) an authentication sequence Seq;
   - creating a session token if the authentication is successful;
   - a biometric server comparing (26) the acquired data and the data contained in the identity document, and enrolling (27) the data if the data matches;
   - transmitting and storing (28) the enrolled data with a public key of the individual and the identifier of the mobile terminal of the individual encrypted by a public key of a storage server $S_2$;
   - storing (29) the identifiers of the groups of data encrypted by the private key of the individual in the mobile terminal.

3. The method as claimed in claim 2, **characterised in that** a private key/public key pair is generated on the basis of biometric characteristics.

4. The method as claimed in claims 2 or 3, **characterised in that**, in order to store the elements, the storage server $S_2$ executes at least the following steps:

   - upon receipt of the enrolled data, and with a session token Ja being present that is associated with an individual, separating the enrolled data into a plurality of groups of elements E;
   - requesting (31) that the server $S_3$ holding the private key $CP_{vS}$/public key $CP_{uS}$ pairs individually signs each E-type element with the private key $CP_{vS}$ of the authority $S_3$;
   - individually encrypting (32) each element E' with the private key $CP_{vS}$ of the authority $S_3$, then with the public key $CP_{ul}$ of the individual, E"=$[CP_{ul}(CP_{vS}(E)]$;
   - storing (33) twice-encrypted elements with a weak link mechanism.

5. The method as claimed in any of claims 1 to 3, **characterised in that** the data contained in a biometric passport is used as biometric/biographic data.

6. The method as claimed in any of claims 1 to 4, **characterised in that** it comprises a step of acquiring a video image of the individual in real-time using an item of equipment and of acquiring an audio stream.

7. The method as claimed in claim 5, **characterised in that** the step of generating a pair of keys comprises the following steps:

   - extracting (71) a set of voice parameters from an audio stream specific to an individual and selecting (72) a number N of voice parameters by a random draw;
   - extracting (73) a set of N visual parameters from a video stream;
   - combining (74) the N visual parameters and the N voice parameters originating from the random draw and generating a matrix A of size NxN;

- binarising (75) a set of components of the matrix A in order to generate a binary vector of size T;
- adding at least two bits of value x to the start and the end of the binary vector in order to obtain an odd number;
- converting (77) the vector into a number, checking whether the number is a prime number;
- adding, if the number is not a prime number, a number "y" in order to obtain the next odd number;
- repeating (78) the steps of adding the "y" value until a prime number is obtained;
- generating at least two prime numbers in order to obtain a public key/private key pair.

8. A system for identifying an individual (1) equipped with a mobile terminal (101) communicating with means configured to implement the steps of the method as claimed in claim 1.

9. The system as claimed in claim 8, **characterised in that** the mobile terminal is equipped with a camera adapted to acquire characteristic data of the face of an individual and a microphone adapted to acquire characteristic data of the voice of an individual.

10. The system as claimed in claim 9, **characterised in that** the mobile terminal comprises a module configured to generate a public key/private key pair for asymmetric encryption by executing the following steps:

   - extracting (71) a set of voice parameters from an audio stream specific to an individual and selecting (72) a number N of voice parameters by a random draw;
   - extracting (73) a set of N visual parameters from a video stream;
   - combining (74) the N visual parameters and the N voice parameters originating from the random draw and generating a matrix A of size NxN;
   - binarising (75) a set of components of the matrix A in order to generate a binary vector of size T;
   - adding at least two bits of value x to the start and the end of the binary vector in order to obtain an odd number;
   - converting (77) the vector into a number, checking whether the number is a prime number;
   - adding, if the number is not a prime number, a number "y" in order to obtain the next odd number;
   - repeating (78) the steps of adding the "y" value until a prime number is obtained;
   - generating at least two prime numbers in order to obtain a public key/private key pair.

FIG.1

FIG.2

FIG.3

$$M_1 = \begin{bmatrix} v_{11} & \cdots & v_{1M} \\ \vdots & \ddots & \vdots \\ v_{N1} & \cdots & v_{NM} \end{bmatrix}$$

$$V = \begin{bmatrix} v_{1q} \\ \vdots \\ v_{Nq} \end{bmatrix}$$

Audio — 71

Image — 73

$$[f_{11} f_{12} \ldots f_{1N}]$$
$$F_1$$

74

$$A = \begin{bmatrix} a_{11} & \cdots & a_{1N} \\ \vdots & \ddots & \vdots \\ a_{N1} & \cdots & a_{NN} \end{bmatrix}$$

75

B 76

10011 ... 00111

77

Très Grand Nombre Premier — 78

$K_{p1}$

1024 bits

FIG.4

**FIG.5**